# EUROPEAN PATENT APPLICATION

(11) **EP 3 677 456 A1**
(43) Date of publication of application: **08.07.2020**
(21) Application number: 18864956.0
(22) Date of filing: 02.10.2018
(51) Int. Cl.: B60G 7/00, B29C 45/14, B29C 69/00, B29C 70/08, B29C 70/12

(54) **ARM FOR AUTOMOBILE, AND METHOD FOR MANUFACTURING ARM FOR AUTOMOBILE**

(30) Priority: 03.10.2017 JP 2017193663
(71) Applicant: Bridgestone Corporation, Tokyo 104-8340 (JP)
(72) Inventor: TANAKA Kanji, Tokyo 104-8340 (JP); KAGA Norihiko, Tokyo 104-8340 (JP); NISHIMURO Yoichi, Tokyo 104-8340 (JP); YAKUSHIJI Gaku, Tokyo 104-8340 (JP)
(74) Representative: Oxley, Robin John George
(86) International application number: PCT/JP2018/036944
(87) International publication number: WO 2019/069951

(57) **Abstract**

To provide a suspension arm having good rigidity and reduced weight, which includes a member A composed of a resin composition containing short fibers having a fiber length of less than 10 mm (short-fiber resin composition), and a member B composed of a resin composition containing continuous fibers having a fiber length of 10 mm or more (continuous-fiber resin composition).

## Description

### TECHNICAL FIELD

This disclosure relates to an arm for automobile and a method of manufacturing an arm for automobile.

### BACKGROUND

Conventionally, arms for automobile such as a suspension arm are generally made of metal materials such as steel or iron. This is because arms for automobile are required to have high rigidity.

Studies have been conducted on the materials used to making arms for automobile in recent years, for the purpose of reducing the weight of the arms for automobile and thus the weight of vehicles.

For example, JP 2001-105090 A (PTL 1) describes a technique of making a suspension member with an aluminum material. In order to further reduce the weight, the use of materials other than metal, such as resins, is also being studied.

### CITATION LIST

### Patent Literature

PTL 1: JP 2001-105090 A

### SUMMARY

### (Technical Problem)

However, in the case of making an arm for automobile with materials other than metal, such as resins, sufficient rigidity may not be secured. Therefore, from the viewpoint of safety as well as weight reduction, it is desirable to develop an arm for automobile that has the same level of rigidity as in the case of using metal materials.

It could thus be helpful to provide an arm for automobile having good rigidity and reduced weight, and a method of manufacturing an arm for automobile with which an arm for automobile having good rigidity and reduced weight can be reliably obtained.

### (Solution to Problem)

We conducted thorough research to achieve this purpose and discovered that the weight can be reduced by making an arm for automobile with resin compositions, and at the same time, high rigidity can be secured by using a resin composition containing particular continuous fibers in a portion of the arm for automobile where stress is applied, and the moldability can be secured by using a resin composition containing particular short fibers in a portion having a complicated shape. In this way, both the rigidity and the weight reduction of the arm for automobile can be achieved at high levels. The present disclosure is completed based on the above discoveries.

That is, the arm for automobile of the present disclosure comprises a member A composed of a resin composition containing short fibers having a fiber length of less than 10 mm, which is a short-fiber resin composition, and a member B composed of a resin composition containing continuous fibers having a fiber length of 10 mm or more, which is a continuous-fiber resin composition.

With this structure, it is possible to realize the effects of good rigidity and excellent weight reduction.

For the arm for automobile of the present disclosure, it is preferable that the member B be a plate member provided on a surface of an arm portion of the arm for automobile, and the member A be a supporting member that supports the plate member. In this way, it is possible to obtain good moldability and more remarkably exhibit the effects of good rigidity and excellent weight reduction.

For the arm for automobile of the present disclosure, it is preferable that a resin in the short-fiber resin composition and a resin in the continuous-fiber resin composition be the same resin. In this way, the bonding force between the member A and the member B can be increased.

For the arm for automobile of the present disclosure, it is preferable that both a resin in the short-fiber resin composition and a resin in the continuous-fiber resin composition comprise at least one selected from the group consisting of a nylon-based resin, a polyethylene resin, a polypropylene resin, a polycarbonate resin, an acrylic resin, a polyphenyl sulfide resin, a polyetherketone-based resin, a polyetherimide resin, a thermoplastic polyurethane resin and a polyester resin. In this way, both the effects of good rigidity and excellent weight reduction can be achieved at higher levels.

For the arm for automobile of the present disclosure, it is preferable that both the short fibers in the short-fiber resin composition and the continuous fibers in the continuous-fiber resin composition comprise at least one selected from the group consisting of carbon fibers, glass fibers and aramid fibers. In this way, it is possible to obtain high adhesion to the resin components in the resin compositions and achieve better rigidity.

For the arm for automobile of the present disclosure, it is preferable that a content of the short fibers in the short-fiber resin composition be 10 % to 50 % by weight. In this way, both the effects of good rigidity and excellent weight reduction can be achieved at higher levels.

For the arm for automobile of the present disclosure, it is preferable that a content of the continuous fibers in the continuous-fiber resin composition be 30 % to 70 % by weight. In this way, both the effects of good rigidity and excellent weight reduction can be achieved at higher levels.

The method of manufacturing an arm for automobile of the present disclosure is a method of manufacturing an arm for automobile comprising a plate member provided in an arm portion of the arm for automobile and a supporting member that supports the plate member, wherein the method comprises: a step of pressing molding a resin composition containing continuous fibers having a fiber length of 10 mm or more, which is a continuous-fiber resin composition, to manufacture the plate member; and a step of, while heating the plate member, injecting molding a resin composition containing short fibers having a fiber length of less than 10 mm, which is a short-fiber resin composition, to manufacture the supporting member, and thermally fusing the plate member and the supporting member.

With these steps, it is possible to obtain an arm for automobile in which both rigidity and weight reduction are achieved at high levels.

### (Advantageous Effect)

According to the present disclosure, it is possible to provide an arm for automobile having good rigidity and reduced weight, and a method of manufacturing an arm for automobile with which an arm for automobile having good rigidity and reduced weight can be reliably obtained.

### BRIEF DESCRIPTION OF THE DRAWINGS

In the accompanying drawings:
FIGS. 1A and 1B are perspective views that schematically illustrate an embodiment of the arm for automobile (a suspension arm) of the present disclosure, where FIG. 1A illustrates a state where the upper surface of the arm for automobile is observed, and FIG. 1B illustrates a state where the back surface of the arm for automobile is observed;
FIGS. 2A, 2B and 2C are flow figures that explain an example of a part of the steps of an embodiment of the method of manufacturing an arm for automobile of the present disclosure; and
FIGS. 3A and 3B are perspective views, each schematically illustrating another embodiment of the arm for automobile of the present disclosure.

### DETAILED DESCRIPTION

### <Arm for automobile>

The following provides a detailed description of an embodiment of the arm for automobile of the present disclosure.

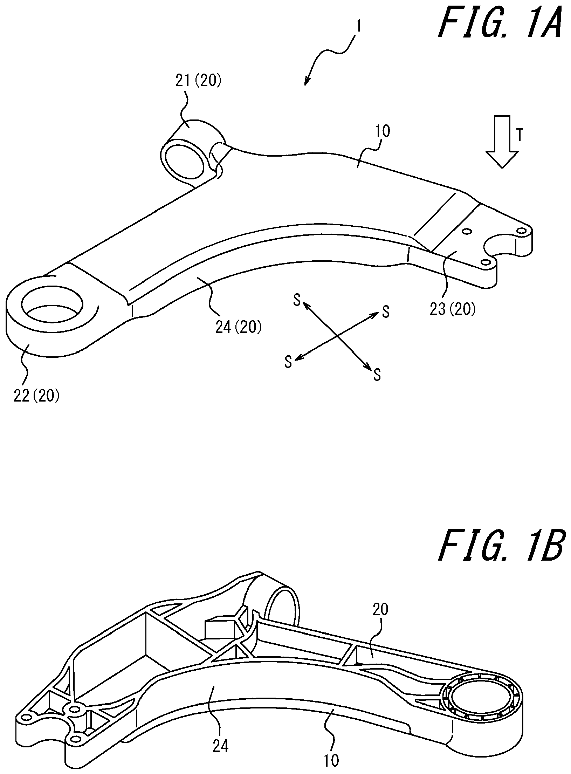

FIGS. 1A and 1B schematically illustrate an example of a suspension arm, which is an embodiment of the arm for automobile of the present disclosure. Note that the direction S in FIGS. 1A and 1B indicates the extending direction of the suspension arm 1, that is, any direction along the surface of a plate member 10 of the suspension arm 1, and the direction T in FIGS. 1A and 1B means the thickness direction of the arm for automobile 1.

A real suspension arm is also provided with other members such as a bush (a rubber member formed inside the cylinder of coupling portions 21 and 22 in FIGS. 1A and 1B) in addition to the embodiment illustrated in FIGS. 1A and 1B, yet the embodiment illustrated in FIGS. 1A and 1B omits these members for convenience of explanation.

As illustrated in FIG. 1A, the suspension arm 1 of an embodiment of the present disclosure includes a member A (supporting member 20 in FIG. 1A) composed of a resin composition containing short fibers having a fiber length of less than 10 mm (hereinafter referred to as "short-fiber resin composition"), and a member B (plate member 10 in FIG. 1A) composed of a resin composition containing continuous fibers having a fiber length of 10 mm or more (hereinafter referred to as "continuous-fiber resin composition").

When the suspension arm 1 is made of resin compositions (short-fiber resin composition and continuous-fiber resin composition), weight reduction can be achieved. Further, the use of a resin composition containing continuous fibers improves the rigidity of the member B (plate member 10 in FIG. 1A), so that sufficient rigidity can be secured with respect to the direction in which stress is applied when it is used as a suspension arm, such as the extending direction of the suspension arm 1 (direction S in FIGS. 1A and 1B). In addition, for the portions having a complicated shape such as coupling portions 21, 22 and 23 and a supporting portion 24, using a resin composition containing short fibers can produce a reinforcing effect and secure the moldability. As a result, both the rigidity and the weight reduction of the suspension arm can be achieved at high levels.

### (Member A and member B)

As described above, the suspension arm of an embodiment of the present disclosure includes a member A composed of a short-fiber resin composition and a member B composed of a continuous-fiber resin composition, yet the position of each member on the suspension arm is not limited.

For example, as illustrated in FIGS. 1A and 1B, the member B may be a plate member 10 provided on the surface side of the arm portion of the suspension arm 1, and the member A may be a supporting member 20 constituting the other portions (portions other than the plate member 10). Conversely, it is also possible to take the member A as the plate member 10 and the member B as the supporting member 20. It is also possible to further include other members that are made of resin compositions different from the short-fiber resin composition and the continuous-fiber resin composition, in addition to the member A and the member B.

However, from the viewpoints of having good moldability and being able to more remarkably exhibit the effects of rigidity and weight reduction, it is preferable that the member B be a plate member provided on the surface of the arm portion of the suspension arm 1, and the member A be a supporting member 20 that supports the plate member 10. Because the member B is made of the continuous-fiber resin composition, it is excellent in rigidity (particularly the rigidity in the extending direction of the plate member). On the other hand, because the member B contains continuous fibers having a fiber length of 10 mm or more, it is difficult to perform injection molding or the like and is poor in moldability. Therefore, the member B is taken as the plate member 10 constituting the surface of the arm portion of the suspension arm 1, and the member A, which has high moldability, constitutes the rest supporting member 20. In this way, it is possible to secure good moldability while obtaining high rigidity.

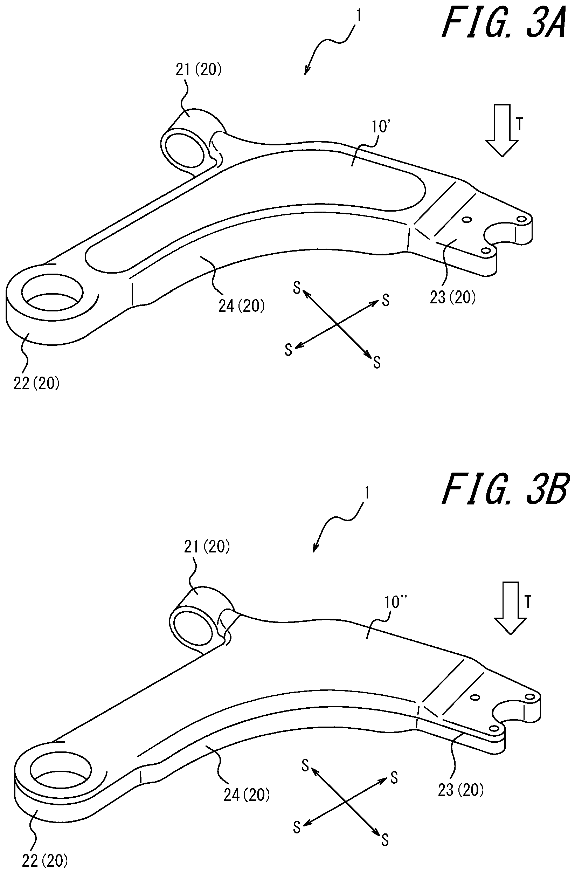

As used herein, the plate member 10 of the suspension arm 1 of an embodiment of the present disclosure refers to a member provided in the arm portion of the suspension arm, as illustrated in FIG. 1A. The plate member 10 may be provided so as to extend over the entire surface of the arm portion of the suspension arm 1, as illustrated in FIG. 1A. It may also be provided as a plate member 10' that covers a part of the surface of the arm portion of the suspension arm 1, as illustrated in FIG. 3A, or it may be provided as a plate member 10" that not only covers the arm portion of the suspension arm 1 but also extends to the surface portions of the coupling portions 21, 22, and 23, as illustrated in FIG. 3B. Although not illustrated in the drawings, the plate member 10 can be provided not only on the front surface of the arm portion of the suspension arm but also on the inside or the back surface.

The supporting member 20 of the suspension arm 1 of an embodiment of the present disclosure refers to a member provided so as to support the plate member 10, as illustrated in FIG. 1A. The supporting member 20 may be constituted by, as illustrated in FIG. 1A, coupling portions 21, 22, and 23 for coupling with other members, a supporting portion 24 that supports the plate member 10 from the back surface, and other portions. The shape of the coupling portions 21, 22, and 23 and the shape of the supporting portion 24 are not particularly limited and may be appropriately changed depending on the design of a product.

### (Short-fiber resin composition and continuous-fiber resin composition)

The member A is made of a resin composition containing short fibers having a fiber length of less than 10 mm (short-fiber resin composition).

Because the short-fiber resin composition contains short fibers having a fiber length of less than 10 mm, many resin molding methods can be used. Therefore, it has high moldability. However, the rigidity is not as high as that of the continuous-fiber resin composition described later.

From the viewpoint of achieving high moldability, the fiber length of the short fibers contained in the short-fiber resin composition should be less than 10 mm and is more preferably 8 mm or less. On the other hand, the lower limit of the fiber length of the short-fibers is not particularly limited. However, from the viewpoint of securing good rigidity, it is preferably about 1 mm or more.

Note that the fiber length of the short fibers is the length of the longest portion of one short fiber and is the average of the fiber lengths of the short fibers contained in the short-fiber resin composition.

The member B is made of a resin composition containing continuous fibers having a fiber length of 10 mm or more (continuous-fiber resin composition). The continuous fibers refer to the fibers contained in a resin composition in a textile state.

The continuous-fiber resin composition can obtain excellent rigidity because it contains continuous fibers having a fiber length of 10 mm or more. However, the moldability is inferior to the short-fiber resin composition described above.

From the viewpoint of achieving excellent rigidity, the fiber length of the continuous fibers contained in the continuous-fiber resin composition should be 10 mm or more, preferably 25 mm or more, and more preferably 50 mm or more. On the other hand, the upper limit of the fiber length of the continuous fibers is not particularly limited, yet it is preferably 500 mm or less.

The fiber length of the continuous fibers is the length of one continuous fiber and is the average of the fiber lengths of the continuous fibers contained in the continuous-fiber resin composition.

The minor axis of the short fibers and the minor axis of the continuous fibers (the cross-sectional diameter of the fibers) are not particularly limited, yet it is preferable both be 1 µm to 50 µm. This is because when the minor axis is 1 µm or more, better rigidity can be secured; and when the minor axis is 50 µm or less, good processability can be secured.

The short-fiber resin composition and the continuous-fiber resin composition are not particularly limited except that they contain the short fibers and the continuous fibers respectively. The type of the resin and the type of the short fibers can be appropriately selected depending on the required performance.

However, from the viewpoint of increasing the bonding force between the member A and the member B, it is preferable that the resin in the short-fiber resin composition and the resin in the continuous-fiber resin composition be the same resin. When the resin in the short-fiber resin composition and the resin in the continuous-fiber resin composition are the same resin component, the bonding force between the member A and the member B can be increased. As a result, the rigidity of the suspension arm can be further improved.

In addition, it is preferable that at least one of the resin in the short-fiber resin composition and the resin in the continuous-fiber resin composition, and more preferable that both include at least one selected from the group consisting of a nylon-based resin, a polyethylene resin, a polypropylene resin, a polycarbonate resin, an acrylic resin, a polyphenyl sulfide resin, a polyetherketone-based resin, a polyetherimide resin, a thermoplastic polyurethane resin and a polyester resin. It is particularly preferable that both include a nylon-based resin. In this way, both the effects of good rigidity and excellent weight reduction can be achieved at higher levels.

The above-mentioned nylon-based resin (polyamide-based resin), polyethylene resin, polypropylene resin, polycarbonate resin, acrylic resin, polyphenyl sulfide resin, polyetherketone-based resin, polyetherimide resin, thermoplastic polyurethane resin and polyester resin are suitable not only from the viewpoint of obtaining high rigidity but also from the viewpoint of moldability.

The types of these resins are not particularly limited, and known resin materials may be used.

Further, it is preferable that at least one of the short fibers in the short-fiber resin composition and the continuous fibers in the continuous-fiber resin composition, and more preferable that both include at least one selected from the group consisting of carbon fibers, glass fibers and aramid fibers. This is because, by using these fiber materials, it is possible to obtain high adhesion to the resin components in the resin compositions and achieve better rigidity.

As used herein, the carbon fibers refer to the fibers obtained by carbonizing acrylic fibers or pitch as a raw material at high temperatures. It is acceptable to use commercially available products in the present disclosure. For example, filaments, tows, cloths, braids, chopped yarns, milled carbon fibers, and other types of carbon fiber may be appropriately used.

The glass fibers are obtained by melting glass and drawing the glass into fibrous form. It is acceptable to use commercially available products in the present disclosure. For example, glass fibers using no-alkali glass, such as quartz glass, as raw material glass may be used.

The aramid fibers are fiberized aramid (aromatic polyamide). It is acceptable to use commercially available products in the present disclosure. For example, Kevlar® (Kevlar is a registered trademark in Japan, other countries, or both), Towaron® (Towaron is a registered trademark in Japan, other countries, or both), and the like may be used.

From the viewpoint of achieving both the effects of good rigidity and excellent weight reduction at higher levels, the content of the short fibers in the short-fiber resin composition is preferably 10 % to 50 % by weight, more preferably 20 % to 40 % by weight, and particularly preferably 25 % to 40 % by weight. This is because when the content of the short fibers in the short-fiber resin composition is 10 % or more by weight, it is possible to maintain good rigidity of the member A; and when the content of the short fibers is 50 % or less by weight, it is possible to reliably realize the weight reduction of the member B and suppress the deterioration of moldability of the short-fiber resin composition.

In addition, from the viewpoint of achieving both the effects of good rigidity and excellent weight reduction at higher levels, the content of the continuous fibers in the continuous-fiber resin composition is preferably 30 % to 70 % by weight, more preferably 40 % to 60 % by weight, and particularly preferably 45 % to 60 % by weight. This is because when the content of the continuous fibers in the continuous-fiber resin composition is 30 % or more by weight, it is possible to further improve the rigidity of the member B; and when the content of the continuous fibers is 70 % or less by weight, it is possible to reliably realize the weight reduction of the member B and suppress the deterioration of moldability of the continuous-fiber resin composition.

### <Method of manufacturing arm for automobile>

The method of manufacturing a suspension arm of an embodiment of the arm for automobile of the present disclosure is a method of manufacturing a suspension arm including a plate member 10 provided in an arm portion of the suspension arm 1 and a supporting member 20 that supports the plate member 10, as the one illustrated in FIGS. 1A and 1B.

The method of the present disclosure includes a step of pressing molding a resin composition containing continuous fibers having a fiber length of 10 mm or more (continuous-fiber resin composition) to manufacture the plate member; and a step of, while heating the plate member, injecting molding a resin composition containing short fibers having a fiber length of less than 10 mm (short-fiber resin composition) to manufacture the supporting member, and thermally fusing the plate member and the supporting member.

According to this manufacturing method, it is possible to reliably obtain a suspension arm having good rigidity and reduced weight.

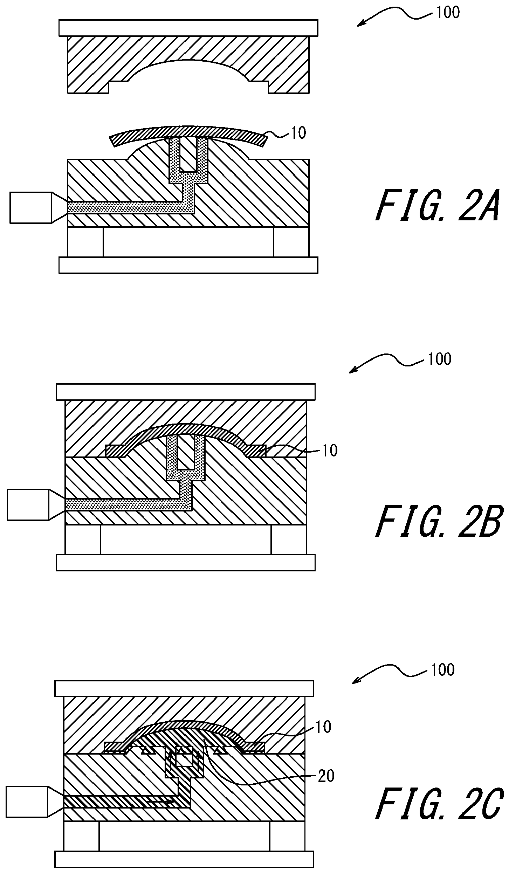

The method of manufacturing a suspension arm of an embodiment of the arm for automobile of the present disclosure will be described with reference to FIGS. 2A to 2C.

Because the continuous-fiber resin composition has high rigidity yet low processability, the plate member 10 is first manufactured by press molding using a manufacturing apparatus 100 as illustrated in FIGS. 2A and 2B, for example.

The conditions for press molding the continuous-fiber resin composition are not particularly limited and can be appropriately changed depending on the physical properties of the continuous-fiber resin composition.

Subsequently, while heating the manufactured plate member 10, the manufacturing apparatus 100 is used to form a supporting member 20 by injecting molding the short-fiber resin composition, and to thermally fuse the plate member 10 and the supporting member 20, as illustrated in FIG. 2C, for example. With this step, it is possible to manufacture a suspension arm having excellent bonding properties between the plate member 10 and the supporting member 20.

The conditions of the injection molding are not particularly limited and can be appropriately changed depending on the physical properties of the short-fiber resin composition or the like.

### EXAMPLES

The present disclosure is described in more detail below with reference to Examples, by which the present disclosure is not intended to be limited in any way.

### (Examples 1 to 2 and Comparative Examples 1 to 4)

Suspension arms of the same shape were prepared under the conditions listed in Table 1.

### (1) (Example 1)

A plate member made of PA66 (polyamide 66) resin containing continuous fibers, which were glass fibers having a fiber length of 200 mm and a minor axis of 10 µm, was formed by press molding. While heating the plate member, a supporting member made of PA66 (polyamide 66) resin containing short fibers, which were glass fibers having a fiber length of 2 mm and a minor axis of 10 µm, was injection molded, and the plate member and the supporting member were thermally fused. In this way, a suspension arm serving as a sample was prepared.

### (2) (Example 2)

A plate member made of PA66 (polyamide 66) resin containing continuous fibers, which were carbon fibers having a fiber length of 200 mm and a minor axis of 6 µm, was formed by press molding. While heating the plate member, a supporting member made of PA66 (polyamide 66) resin containing short fibers, which were carbon fibers having a fiber length of 2 mm and a minor axis of 6 µm, was injection molded, and the plate member and the supporting member were thermally fused. In this way, a suspension arm serving as a sample was prepared.

### (3) Comparative Example 1

A suspension arm serving as a sample was prepared by subjecting steel to cast forming.

### (4) Comparative Example 2

A suspension arm serving as a sample was prepared by subjecting PA66 (polyamide 66) resin containing short fibers, which were glass fibers having a fiber length of 2 mm and a minor axis of 10 µm, to injection molding.

### (5) Comparative Example 3

A suspension arm serving as a sample was prepared by subjecting PA66 (polyamide 66) resin containing short fibers, which were carbon fibers having a fiber length of 2 mm and a minor axis of 6 µm, to injection molding.

### (6) Comparative Example 4

We attempted to prepare a suspension arm serving as a sample by using PA66 (polyamide 66) resin containing continuous fibers, which were glass fibers having a fiber length of 200 mm and a minor axis of 10 µm, as a material and subjecting the PA66 resin to injection molding. However, we failed in the injection molding due to the low moldability of the material, and no suspension arm could be prepared.

### (Evaluation)

The obtained suspension arm of each sample was evaluated as follows.

### (1) Weight of suspension arm

The weight (kg) of the suspension arm of each sample was measured.

The evaluation results are listed in Table 1 as index values, where the weight of the suspension arm of Comparative Example 1 is taken as 100. The smaller the value of the weight is, the more the weight reduction is achieved.

### (2) Rigidity of suspension arm

With respect to the suspension arm of each sample, the displacement amount (mm) of the suspension arm was measured when, assuming that the suspension arm was mounted on a vehicle, a load of 11050 N was applied in a direction from the front to the rear of the vehicle.

The evaluation results are listed in Table 1 as index values, where the displacement amount of the suspension arm of Comparative Example 1 is taken as 100. The smaller the value of the displacement amount is, the higher the rigidity is.

### (3) Moldability

In the case where the suspension arm of a sample was successfully manufactured, the moldability was evaluated as "good". In the case where the suspension arm could not be manufactured, the moldability was evaluated as "poor". The results are listed in Table 1.

**Table 1**

| Sample No. | | Example 1 | | Example 2 | | Comparative Example 1 | Comparative Example 2 | Comparative Example 3 | Comparative Example 4 |
|---|---|---|---|---|---|---|---|---|---|
| | | Plate-like member | Supporting member | Plate-like member | Supporting member | | | | |
| Composition (weight%) | Steel | - | - | - | - | 100 | - | - | - |
| | Nylon resin^{*1} | 100 | 100 | 100 | 100 | - | 100 | 100 | 100 |
| | Glass fiber (fiber length 200 mm, minor axis 10 µm) | 59 | - | - | - | - | - | - | - |
| | Glass fiber (fiber length 2 mm, minor axis 10 µm) | - | 45 | - | - | - | 45 | - | - |
| | Carbon fiber (fiber length 200 mm, minor axis 6 µm) | - | - | 67 | - | - | - | - | 30 |
| | Carbon fiber (fiber length 2 mm, minor axis 6 µm) | - | - | - | 30 | - | - | 30 | - |
| Evaluation | Weight | 40 | | 40 | | 100 | 40 | 40 | Cannot be measured |
| | Rigidity (displacement amount) | 100 | | 100 | | 100 | 150 | 112 | |
| | Moldability | Good | | Good | | Good | Good | Good | Poor |

| | | | | | | | | | |
|---|---|---|---|---|---|---|---|---|---|
| *1 Nylon 66 | | | | | | | | | |

It can be understood from the results in Table 1 that the samples of Examples 1 and 2 show excellent results in a well-balanced manner in all evaluation items, as compared with Comparative Examples.

On the other hand, it can be seen that the sample of Comparative Example 1 has a large value in weight, and the samples of Comparative Examples 2 and 3 have low rigidity.

### INDUSTRIAL APPLICABILITY

According to the present disclosure, it is possible to provide a suspension arm having good rigidity and reduced weight, and a method of manufacturing a suspension arm with which a suspension arm having good rigidity and reduced weight can be reliably obtained.

### REFERENCE SIGNS LIST

- 1: suspension arm (arm for automobile)
- 10: plate member (member B)
- 20: supporting member (member A)
- 21, 22, 23: coupling portion
- 24: supporting portion
- 100: manufacturing apparatus

## Claims

1. A suspension arm, comprising
a member A composed of a resin composition containing short fibers having a fiber length of less than 10 mm, which is a short-fiber resin composition, and
a member B composed of a resin composition containing continuous fibers having a fiber length of 10 mm or more, which is a continuous-fiber resin composition.

2. The suspension arm according to claim 1, wherein the member B is a plate member provided in an arm portion of the suspension arm, and the member A is a supporting member that supports the plate member.

3. The suspension arm according to claim 1 or 2, wherein a resin in the short-fiber resin composition and a resin in the continuous-fiber resin composition are the same resin.

4. The suspension arm according to any one of claims 1 to 3, wherein both a resin in the short-fiber resin composition and a resin in the continuous-fiber resin composition comprise at least one selected from the group consisting of a nylon-based resin, a polyethylene resin, a polypropylene resin, a polycarbonate resin, an acrylic resin, a polyphenyl sulfide resin, a polyetherketone-based resin, a polyetherimide resin, a thermoplastic polyurethane resin and a polyester resin.

5. The suspension arm according to any one of claims 1 to 4, wherein both the short fibers in the short-fiber resin composition and the continuous fibers in the continuous-fiber resin composition comprise at least one selected from the group consisting of carbon fibers, glass fibers and aramid fibers.

6. The suspension arm according to any one of claims 1 to 5, wherein a content of the short fibers in the short-fiber resin composition is 10 % to 50 % by weight.

7. The suspension arm according to any one of claims 1 to 6, wherein a content of the continuous fibers in the continuous-fiber resin composition is 30 % to 70 % by weight.

8. A method of manufacturing a suspension arm comprising a plate member provided in an arm portion of the suspension arm and a supporting member that supports the plate member, wherein the method comprises:
a step of pressing molding a resin composition containing continuous fibers having a fiber length of 10 mm or more, which is a continuous-fiber resin composition, to manufacture the plate member; and
a step of, while heating the plate member, injecting molding a resin composition containing short fibers having a fiber length of less than 10 mm, which is a short-fiber resin composition, to manufacture the supporting member, and thermally fusing the plate member and the supporting member.
